(19) Europäisches Patentamt
European Patent Office
Office européen des brevets

(11) EP 1 619 678 B1

(12) # EUROPEAN PATENT SPECIFICATION

(45) Date of publication and mention of the grant of the patent:
**23.03.2011 Bulletin 2011/12**

(21) Application number: **04729284.2**

(22) Date of filing: **23.04.2004**

(51) Int Cl.:
***G11B 7/09*** *(2006.01)* ***G11B 7/135*** *(2006.01)*
***G02B 5/18*** *(2006.01)* ***G02B 5/22*** *(2006.01)*
***G02B 27/10*** *(2006.01)* ***G02B 5/20*** *(2006.01)*

(86) International application number:
**PCT/JP2004/005936**

(87) International publication number:
**WO 2004/097816 (11.11.2004 Gazette 2004/46)**

(54) **DIFFRACTION ELEMENT AND OPTICAL HEAD DEVICE**

BEUGUNGSELEMENT UND OPTISCHE KOPFEINRICHTUNG

ELEMENT DE DIFFRACTION ET DISPOSITIF DE TETE OPTIQUE

(84) Designated Contracting States:
**AT BE BG CH CY CZ DE DK EE ES FI FR GB GR HU IE IT LI LU MC NL PL PT RO SE SI SK TR**

(30) Priority: **25.04.2003 JP 2003121736**
**29.08.2003 JP 2003306424**

(43) Date of publication of application:
**25.01.2006 Bulletin 2006/04**

(73) Proprietor: **ASAHI GLASS COMPANY LTD.**
**Tokyo 100-8405 (JP)**

(72) Inventors:
- **SATO, Hiromasa,**
**Asahi Glass Koriyama Elec. Material**
**Koriyama-shi, Fukushima 963-0215 (JP)**
- **MURAKAMI, Ryota,**
**Asahi Glass Koriyama Elec. Material**
**Koriyama-shi, Fukushima 963-0215 (JP)**

(74) Representative: **Müller-Boré & Partner**
**Patentanwälte**
**Grafinger Straße 2**
**81671 München (DE)**

(56) References cited:
**EP-A- 1 361 461** **JP-A- 2002 190 130**
**JP-A- 2002 318 306** **JP-A- 2002 350 625**
**JP-A- 2005 292 244**

- **PATENT ABSTRACTS OF JAPAN vol. 2003, no. 05, 12 May 2003 (2003-05-12) -& JP 2003 014914 A (SHARP CORP), 15 January 2003 (2003-01-15)**
- **PATENT ABSTRACTS OF JAPAN vol. 2003, no. 04, 2 April 2003 (2003-04-02) & JP 2002 372624 A (RICOH CO LTD), 26 December 2002 (2002-12-26)**
- **PATENT ABSTRACTS OF JAPAN vol. 016, no. 159 (P-1339), 17 April 1992 (1992-04-17) -& JP 04 009803 A (KURARAY CO LTD), 14 January 1992 (1992-01-14)**

EP 1 619 678 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a diffraction element and an optical head device, in particular, to a diffraction element to be employed for an optical head device for recording and reproducing an information of an optical recording medium, and to an optical head device employing this diffraction element.

BACKGROUND ART

Various types of optical head device has been used, which records an information in an information recording plane of an optical recording medium such as an optical disk of CD or DVD, or an optical magnetic disk (hereinafter, they are referred to as optical disks), and which reproduces an information recorded in the information recording plane. For these optical head devices, a laser diode of 790 nm wavelength band is used for recording/reproducing an optical disk of CD type, and a laser diode of 660 nm wavelength band is used for recording/reproducing an optical disk of DVD type.
In such an optical head device, an optical disk is rotated as laser light is converged on a track formed on an information recording plane of the optical disk. Therefore, it is necessary to keep a beam of the converged laser light on the track, and various tracking methods have been developed for this purpose. Among these tracking methods, a three-beam method is well known. In the three-beam method, a diffraction element is used to generate a main beam as 0-th order diffraction light (transmitted light) and sub-beams as ±1-st order diffraction lights.
Here, a conventional optical head device employing a laser light source generating light of 660 nm wavelength, is described with reference to an example of the construction of Fig. 7.
Light of wavelength 660 nm emitted from a laser diode 701 is transmitted through a beam splitter 702, transformed into a parallel light by a collimator lens 703, transmitted through an objective lens 704 and converged on an information recording plane of an optical disk 705. Such a converged light is reflected by the information recording plane and such a reflected light travels reversely through the same optical path as that of the outgoing light.
Namely, the reflected light is transformed into a parallel light again by the objective lens 704, converged by the collimator lens 703 and incident into a beam splitter 702. Light reflected by the beam splitter 702 travels along an optical axis at an angle of 90° to the optical axis of the outgoing path, and converged on a photo-receiving plane of a photodetector 706. Then, such a signal light is transformed into an electrical signal by the photodetector 706. A three-beam generation diffraction grating 707 is, for example, disposed between the laser diode 701 and the beam splitter 702, and sub-beams as ±1-st order diffraction lights generated by the three-beam generation diffraction element 707 are converged on a photo-receiving plane of the photodetector 706 in the same manner as the main beam, and transformed into an electrical signal to be used for tracking servo.
As the three-beam generation diffraction element 707, one formed by fabricating a transparent substrate or fabricating a laminated film laminated on the transparent substrate, is generally used as such a diffraction element excellent in reliability and mass-productivity. In such diffraction element, a diffraction grating generates diffraction by a phase difference between the substrate or the laminated film fabricated to have convex portions and air occupying its concave portions, and a desired diffraction efficiency can be obtained by adjusting the phase difference by adjusting the fabrication depth. Fig. 8 (a) shows the wavelength-dependence, normalized by a wavelength of 660 nm, of the phase difference between convex portions and concave portions of the diffraction element when the refractive index difference between generally used $SiO_2$ vapor-deposition film and air is utilized. Further, Fig. 8 (b) shows an example of the change of diffraction efficiency of a conventional diffraction element depending on wavelength.
EP 1 361 461 A1 discloses a wavelength selective diffraction element capable of transmitting without diffracting light having a wavelength emitted from a two-wavelength semiconductor laser and capable of diffracting light having another wavelength.

DISCLOSURE OF THE INVENTION

However, since a material usually used for forming the convex portions of a grating has a higher refractive index and a larger wavelength dispersion as compared with air occupying the concave portions of the grating, the difference of refractive indexes between the convex portions and the concave portions of the grating decreases as the wavelength increases. Namely, the difference of refractive index shows a negative change rate in response to the change of wavelength. Further, generally speaking, since the wavelength dispersion increases as the refractive index of material increases, a combination of two media other than air having different refractive indexes also shows a negative change rate in response to the change of wavelength in the same manner. Further, since the phase difference determining the diffraction efficiency is in proportion not only to the refractive index difference but also to the reciprocal of the wavelength, the diffraction efficiency shows the negative change rate in response to the change of wavelength within the range where

the phase difference is at most π in the above-mentioned common diffraction element to be used for an optical head device.

Therefore, there has been a problem that the diffraction efficiency decreases as the wavelength becomes longer in response to the variation of oscillated wavelength due to individual difference of laser diodes, or in response to the change of oscillated wavelength due to the change of environmental temperature. The change of the quantity of diffraction light has created the problem that the variation of signal strength or signal to noise ratio is caused or the gain setting of a photodetector to be used for signal processing becomes improper for the initial setting.

Further, at a time of designing a diffraction grating functioning in two types of wavelength bands, the phase difference between the grating convex portions and the grating concave portions at each wavelength is substantially determined by the reciprocal of a wavelength and not optionally selectable.

It is an object of the present invention to provide a diffraction element adapted for an optical head device for e.g. CD type optical disks and DVD type optical disks and employing a laser diode as a light source, wherein the diffraction element shows little change of diffraction light quantity in response to the change of wavelength of laser diode and enables to conduct a stable signal detection at a time of recording or reproducing an information of an optical disk, and to provide an optical head device employing such a diffraction element.

Further, it is another object of the present invention to widen the setting range of diffraction efficiency for light in each of two different wavelength bands.

The present invention provides a diffraction element according to claim 1 and comprising a transparent substrate having a grating of a periodical concavo-convex shape formed on its surface, and a filling material filling at least concave portions of the grating, characterized in that both a concavo-convex material forming the concavo-convex portion in the grating and the filling material are materials that contain an organic pigment having the absorption edge of light in a wavelength region shorter than the wavelength used, wherein the wavelength used is a 660 nm wavelength band of a laser diode for a DVD and a 790 nm wavelength band of a laser diode for CD, and the refractive index of one material having a larger wavelength dispersion between the concavo-convex material and the filling material is lower than the refractive index of the other material having a smaller wavelength dispersion between the concavo-convex material and the filling material, in the entire region of the wavelength used, which is said 660 nm wavelength band of laser diode for a DVD and said 790 nm wavelength band of a laser diode for a CD, wherein the material having the lower refractive index contains a red organic pigment that has an absorption peak in the vicinity of 550 nm and wherein the material having the higher refractive index has an absorption edge at a shorter wavelength than the absorption edge of the material having the lower refractive index.

Further, the present invention provides the diffraction element, wherein the concavo-convex material has a resist containing an organic pigment.

Further, the present invention provides the diffraction element, wherein the organic pigment is a red organic pigment which is at least one member selected from the group consisting of diketopyrrolopyrrole type, anthraquinone type, quinacridone type, condensed azo type and perylene type red organic pigments, or a combination thereof.

Further, the present invention provides the diffraction element, wherein the red organic pigment is an anthraquinone type red organic pigment.

Further, the present invention provides an optical head device as defined in claim 5 comprising a laser diode as a light source, an objective lens for converging light emitted from the laser diode on an optical recording medium, and a photodetector for detecting the emitted light converged and reflected by the optical recording medium, whereby an information is recorded in or reproduced from the optical recording medium, wherein the diffraction element of claim 1 is disposed in an optical path between the laser diode and the objective lens.

Further, the present invention provides the optical head device, wherein the grating of a periodical concavo-convex shape of the diffraction element is configured in such a manner that a region where light beams are transmitted is divided, so that the diffracted light beams are divided.

## BRIEF EXPLANATION OF THE DRAWINGS

Fig. 1 shows a cross-sectional view showing the diffraction element of Example 1.

Fig. 2 shows a cross-sectional view showing the diffraction element of Example 2.

Fig. 3 shows a conceptual view schematically showing an optical head device comprising the diffraction element of the present invention.

Fig. 4 shows a cross-sectional view schematically showing an example of the diffraction element as a technical background for understanding the present invention.

Fig. 5 includes graphs showing the properties of the diffraction grating, wherein in (a), the solid line shows the wavelength-dependence of refractive index of concavo-convex material, and the broken line shows the wavelength-dependence of refractive index of the filling material in the diffraction grating shown in Fig. 4, and in (b), the solid

line shows the wavelength-dependence of the phase difference between the convex portions and the concave portions in the diffraction grating shown in Fig. 4, and the broken line shows the wavelength-dependence of the phase difference between the convex portions and the concave portions of a conventional diffraction element.

Fig. 6 includes graphs showing the properties of the diffraction element in cases of three different densities of red organic pigment mixed in the diffraction element, wherein (a) shows the wavelength-dependence of phase difference between the convex portions and the concave portions of the diffraction grating, and (b) shows the wavelength-dependence of 1-st order diffraction efficiency.

Fig. 7 shows a conceptual view schematically showing an optical head device comprising a conventional diffraction element.

Fig. 8 includes graphs showing the properties of conventional diffraction element, wherein (a) shows the wavelength-dependence of phase difference, and (b) shows the wavelength-dependence of 1-st order diffraction efficiency.

Fig. 9 includes graphs showing the properties of a conventional diffraction element, wherein (a) shows the dispersion of refractive index by a wavelength of a material to be used for diffraction element, and (b) shows the wavelength-dependence of phase difference.

Fig. 10 shows a top view schematically showing the pattern of diffraction element to be applied to the diffraction element of the present invention.

## BEST MODE FOR CARRYING OUT THE INVENTION

The present invention provides a diffraction element comprising a transparent substrate on which a grating of periodical concavo-convex shape is formed on its surface, and a filling material filling the concave portions of the grating. Then, both of the concavo-convex material forming the concavo-convex portion of the grating of the diffraction element and the filling material, are materials having an absorption edge of light in a wavelength region shorter than the wavelength to be used. Further, in the diffraction element, the material of either the concavo-convex material or the filling material having the absorption edge, is a material having a refractive index lower than the refractive index of the other material in all the wavelength region to be used.

Here, the filling material may not only fill the concavo portions but also cover the concavo-convex portion. Further, the concavo-convex material forming the concavo-convex portion may form both the concave portions and the convex portions, or it may only form isolated concave portions. Namely, the convex portions and the concave portions may be made of different materials. In the following descriptions, a concavo-convex material indicates a material forming the convex portions.

The diffraction efficiency of the diffraction grating is determined by the phase difference generated by the difference of the refractive indexes between the convex portions and the concave portions of grating. The phase difference $\varphi$ at a wavelength $\lambda$ is represented by the following formula (2)

$$\varphi = 2\pi \cdot \{ (n_1(\lambda) - n_2(\lambda)) \cdot d/\lambda \qquad \text{Formula (2)}$$

wherein the average refractive index of the grating convex portions depending on the wavelength is designated as $n_1(\lambda)$, the average refractive index of the grating concave portions is designated as $n_2(\lambda)$, the depth of the grating is designated as d and the incident wavelength is designated as $\lambda$.

In general, every material to be used for the convex portions of the diffraction element shows the tendency that the refractive index is smaller as the wavelength is longer, and the change of refractive index in response to the change of wavelength is larger as the refractive index is higher. Fig. 9 (a) shows a graph showing the wavelength-dependence of the refractive index of typical materials for conventional diffraction gratings, wherein the solid line shows that of $SiO_2$ as an example of low-refractive index material, and the broken line shows that of $TiO_2$ as an example of high-refractive index material. Further, Fig. 9 (b) shows the change of phase difference between convex portions and concave portions, normalized by a value of 660 nm, of a diffraction element having a construction that the grating convex portions are made of any one of the above materials and the concave portions are occupied by air, wherein the solid line shows a case of using $SiO_2$ and the broken line shows a case of using $TriO_2$.

As evident from Fig. 9 (a) and Fig. 9 (b), in each of these cases, the refractive index becomes smaller as the wavelength is larger, and the change of phase difference is larger as the refractive index is higher. Therefore, in a case where a diffraction grating is configured so that the grating convex portions are made of these materials and the grating concave portions are occupied by air, the phase difference between the convex portions and the concave portions of the grating shows a large negative change rate, and the diffraction efficiency becomes lower as the incident wavelength is longer.

Fig. 4 shows a cross-sectional view of an example as a technical background for understanding the invention,

in which one of the mediums in a combination of mediums, contains an organic pigment. A concavo-convex material 402 as a resin containing an acrylic type base polymer having a refractive index of about 1.5 and a red organic pigment having an absorption peak in the vicinity of 550 nm, is formed on a transparent 401, the concave portions are filled with a filling material 403 having a refractive index of about 1.7 and having small wavelength-dispersion, and a transparent substrate 404 is adhered and held to oppose them to thereby constitute a diffraction element.

Fig. 5 (a) shows the wavelength-dependence of refractive index of the resin used for the diffraction grating shown in Fig. 4. The solid line shows the refractive index of the resin forming the concavo-convex material 402, and the broken line shows the refractive index of the filling material 403 filling the concave portions of the grating. As evident from Fig. 5 (a), the refractive index difference between those two materials becomes larger as the wavelength is longer. In Fig. 5(b), the solid line shows the phase difference between the convex portions and concave portions normalized by a value of 660 nm of the diffraction grating constituted by these materials. The difference of refractive indexes between these two materials shows a positive change rate in response to the wavelength and the change rate is approximately equal to the change rate of the wavelength in the vicinity of 660 nm, and accordingly, the phase difference between the concave portions and the convex portions of the grating shows substantially a constant value in the vicinity of 660 nm. The phase difference between the concave portions and the convex portions of a conventional diffraction element shown by the broken line in Fig. 5 (b), decreases as the wavelength increases. As compared with the broken line, it is evident from the solid line that the wavelength-dependence is significantly reduced.

It is possible to change the wavelength in order to provide the largest effect by adjusting the concentration of red organic pigment mixed in the concavo-convex material in the above-mentioned combination of concavo-convex material and filling material whereby a constant phase difference can be shown in the vicinity of wavelength 660 nm. Fig. 6 (a) shows the wavelength-dependence of the phase difference between the convex portions and the concave portions in three different cases of the concentration of red organic pigment to be mixed. In addition to the case of optimizing for 660 nm to be used for DVD shown by the solid line, it is also possible to optimize for 790 nm to be used for CD as shown in the broken line. Further, it is understandable that by optimizing for the intermediate wavelength between 660 nm and 790 nm, as shown in the dashed line, it is possible to achieve a construction having a certain effect for both of these wavelengths. Fig. 6 (b) is a graph showing the wavelength-dependence of the diffraction efficiency in a case of using the materials of Fig. 6 (a), wherein the solid line shows a case of optimizing for 660 nm, the broken line shows a case of optimizing for 790 nm and the dashed line shows a case of optimizing for the intermediate.

As evident from Fig. 6 (b), it is not only possible to design make the diffraction efficiencies at 660 nm and 790 nm approximately equal, but also possible to make, for example, a diffraction element whose diffraction efficiency at a shorter wavelength of 660 nm is higher than the diffraction efficiency of a longer wavelength of 790 nm, which has been difficult to achieve by conventional diffraction gratings as evident from the wavelength-dependence of the diffraction efficiency in a case of optimizing for 790 nm. By this effect, by adjusting the combination of the refractive indexes of the concavo-convex material of the grating and the filling material with the wavelength-dependence of the refractive index, it is possible to select the diffraction efficiency at each wavelength flexibly to a certain extent at least in a case of an optical head device using two wavelengths.

As described above, it is possible to increase the refractive index by an abnormal dispersion effect by including in the concavo-convex material or the filling material an organic pigment having an absorption edge in a wavelength region shorter than the wavelength of light incident in the diffraction element.

The present invention provides a diffraction element comprising a transparent substrate having a surface in which a grating of periodical concavo-convex shape is formed, and a filling material filling at least concave portions of the grating. Both the concavo-convex material forming the concavo-convex portion of the grating and the filling material are materials having a light-absorption edge in a wavelength region shorter than the wavelength to be used. Further, in the diffraction element, the refractive index of either the concavo-convex material or the filling material whichever has a larger wavelength dispersion, is lower than the refractive index of the concavo-convex material or the filling material whichever has a smaller wavelength dispersion in the entire region of wavelength to be used. In this case, by setting the absorption edge of the material having a higher refractive index at a shorter wavelength than the absorption edge of the material having a lower refractive index, it is possible to further reduce the wavelength dependence of the phase.

Thus, by employing a material having an absorption edge of light in a shorter wavelength region than the wavelength to be used, for each of the concavo-convex material and the filling material, it is possible to simplify the design of phase difference at every wavelength determined by the refractive index difference and the wavelength, as compared with the case of employing a material having an absorption edge of light in a shorter wavelength region than the wavelength to be used, only for one of the materials. From these features, the diffraction grating has an effect that substantially a constant diffraction efficiency can be obtained in a wider region.

The organic pigment may be deposited to form a film by e.g. vapor deposition, or the organic pigment may be mixed into a resin binder, a polymerizable monomer, a polymerization initiator, a sensitizer, a solvent, a surfactant or the like, so as to form a film of an appropriately prepared composition containing these materials. In the case of using the composition, it is preferred to coat the transparent substrate with the composition, remove the solvent by heating

and then polymerize and cure the composition. Further, as the case requires, a heating treatment may be applied after the polymerization and curing.

In the above composition, when the organic pigment is contained in a resist that can be etched, it is easily possible to fabricate a desired grating shape by etching non-polymerized-cured portions as portions not applied with selective curing, such being preferred. Further, if the above-mentioned resist is a photoresist, the grating can directly be formed by photolithography, such being particularly preferred.

The wavelength to be used is in a 660 nm wavelength band for DVD or in a 790 nm wavelength band for CD and a red organic pigment is employed.

The red organic pigment does not show significant absorption in any of the above wavelength bands, whereby it can achieve high transmittance. On the other hand, it has an absorption in a wavelength shorter than 660 nm, the absorption rapidly increases as the wavelength decreases, and the red organic pigment has an absorption peak in the vicinity of 550 nm. Accordingly, by the effect of abnormal dispersion, the wavelength-dependence of the refractive index can be changed in the 660 nm wavelength band and the 790 nm wavelength band.

As the red pigment, an organic pigment categorized into a diketopyrrolopyrole type, an anthraquinone type, a quinacridone type, a condensed azo type, a perylene type or the like may be used. These organic pigments may be used alone or used as a mixture of two or at least three types. Among these, a diketopyrrolopyrole type represented by pigment red 254, or an anthraquinone type represented by pigment red 177 is excellent in durability, and is preferably used as the red organic pigment of the element of the present invention.

The photoresist containing the red organic pigment is one used for producing a color filter for a liquid crystal display, and a type of commercially available resist for color filter can be used as it is. Further, the concentration or the compound of the red organic pigment, the resin binder, the polymerization initiator for the polymerable monomer, the sensitizer, the solvent, the surfactant and the like, may be adjusted as the case requires.

Further, besides the method of forming the grating by etching the above-mentioned resist containing organic pigment before curing, the grating may be formed by applying photolithography and etching treatments to a member (a film or a vapor-deposited film) after curing. Further, the concave portions or the concavo-convex portion of the grating formed on the substrate surface may be filled with a resist containing an organic pigment as a filling material. As another material for filling material, a photo-curable resin, a thermosetting type resin or the like may be mentioned.

The lager the wavelength-dependence of the refractive index of the above-mentioned resin containing a red organic pigment is, the larger the refractive index is. Therefore, the photo-curable resin and the thermo-setting resin for combination are preferably ones having high refractive indexes and preferably ones having refractive indexes of at least 1.6.

As such a photo-curable resin and a thermo-setting resin, a composition containing a compound represented by Formula 1 described in JP-A-2000-309584 is mentioned. This compound has a high refractive index and has a small wavelength-dispersion of refractive index, and accordingly, is preferably used for this purpose. However, such photo-curable resin and thermo-setting are not limited to this compound.

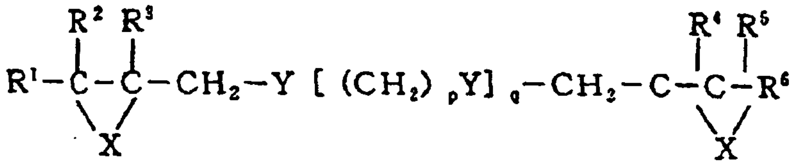

Formula 1

In the formula, each of $R^1$ to $R^6$ shows a hydrocarbon group having a carbon number of from 1 to 10 or a hydrogen atom. X denotes S or O, and the number of S is at least 50% based on the total number of S and O constituting the three-membered rings. Y denotes O, S, Se or Te, and p is an integer within a range of from 0 to 6 and q is an integer within a range of from 0 to 4.

The same effect can be obtained by combining with an inorganic material, and in this case, a resin containing an organic pigment is used for either one of the concavo-convex material and the filling material, and for the other material, a material having a high refractive index such as $TiO_2$, $Ta_2O_5$, $Al_2O_3$ or the like may be used, whereby the same effect can be obtained. In order to suppress the change of the property in response to the change of the environmental temperature, a combination of organic materials behaving similarly in response to temperature change is preferred. In such a combination, the change of the property in response to the temperature change becomes small, such being preferred.

Further, there is no optical difference between the convex portions and the concave portions of the grating of the present invention, and a material having either one of the dispersion properties may be formed into the grating first to obtain the same effect.

The present invention can be applied to an optical head device employing a laser diode as a light source, and has an effect of suppressing the change of diffraction efficiency in response to the variation of wavelength of laser diode due to individual difference or the wavelength variation due to the change of environmental temperature, and has an effect of achieving an optical head device capable of stably recording and reproducing. The effect of the present invention to reduce the wavelength-dependence of the diffraction efficiency, is effective not only for the diffraction efficiency shown in the examples, but also effective for diffraction efficiencies of other cases. The present invention is particularly effective for a diffraction grating designed to have high-transmittance and low-diffraction efficiency, which may cause a wavelength variation in the construction of conventional diffraction element. Accordingly, the present invention is particularly effective for a writing-type optical head which requires sufficient quantity of transmitted light.

Since the present invention allows designing to obtain a diffraction effect for not only light within a range of wavelength variation but light of wavelength in wider region, the present invention is effective when it is applied to a diffraction element functioning for light of two different wavelengths.

As an actual application, a diffraction type optical element for controlling a converging property or an aberration property by using the difference of diffraction angle depending on wavelength, or a diffraction element for discontinuously dividing the phase or the pitch of the concavo-convex portion of the grating within the effective region where light is transmitted, or for dividing diffraction light by changing the inclination of the border line of regions of the concavo-convex portion of the grating, namely, for dividing a diffraction spot, are mentioned.

Specifically, a three-beam generation diffraction grating for two wavelengths to be used for phase-sift differential push-pull method capable of dealing with different track pitches for e.g. CD and DVD, or a hologram diffraction element to be used for two-wavelength laser unit having independent photodetectors for the respective two different wavelengths, may be mentioned.

The present invention is effective for these elements since it is possible to design with large flexibility the diffraction properties at two wavelengths to be used, and it is possible to obtain substantially desired diffraction properties for light of each wavelength.

Further, the center wavelength of the element is not limited to a specific wavelength, but besides the 660 nm wavelength band to be used for DVD and the 790 nm wavelength band to be used for CD, the present invention provides the same effect for a high-density optical head device using a wavelength in a 400 nm wavelength band for increasing the recording density, by appropriately selecting the material construction.

The diffraction element of this embodiment can be constituted by providing a phase plate between the top and bottom glass substrates described in Fig. 4. By integrating the phase plate with the diffraction element, both the diffraction effect and an effect of changing polarization state for incident light can be achieved in a small-sized unit, such being preferred. As the phase plate, a half wave plate a quarter wave plate or the like is mentioned, and it is also possible to provide a plural phase plates.

From now, Examples will be described.

EXAMPLE 1

Fig. 1 shows a cross-sectional view of the diffraction element of this Example.

A mixture was prepared by mixing 48% of pigment-containing liquid (CF red EX-2739 manufactured by Mikuni Color Ltd., which contains 15% of pigment red 254 as a red organic pigment), 41% of pentaerythritol tetraacrylate (KAYARAD-DPHA manufactured by Nippon Kayaku Co., Ltd.) and 11% of propylene glycol-1-monomethyl ether-2-acetate. Further, as a photo-polymerization initiator, a composition was prepared by mixing Irgacure 907 (manufactured by Ciba Speciality Chemicals) with the above mixture so that its concentration would become 0.2%. Here, the unit of these values is mass %.

A glass substrate 101 as a transparent substrate provided with low-reflective coating, not shown, on its back side, was uniformly coated with the composition by spin coating as a concavo-convex material, and maintained at 100°C for 3 minutes. Then, entire surface of the composition was irradiated with ultraviolet rays, and maintained at 200°C for 60 minutes to form a film of 0.55 μm thick. On the film thus formed, a $SiO_2$ film of 60 nm thick was formed by sputtering, and a photo-resist was applied on the $SiO_2$ film by spin coating. Then, a UV-exposure was conducted with a photomask disposed on the $SiO_2$ film side of the glass substrate 101, followed by conducting a dry etching to form a concavo-convex portion 102 of grating containing the red pigment. Then, the $SiO_2$ film was removed to form the diffraction grating shown in Fig. 1 having a grating pitch of 20 μm and a grating height of 0.55 μm.

The refractive index of the concavo-convex material was 1.575 at a wavelength 660 nm.

Then, the concavo-convex portion 102 of the grating was filled with a polymer in a state of monomer which suppose to have a refractive index of 1.704 at a wavelength 660 nm after polymerization, as a filling material 103. Further, another glass substrate 104 provided with a low-reflective coating (not shown) was laminated so as to sandwich the diffraction grating and the polymer. Then, the monomer was polymerized and cured by heating to form a diffraction element 1.

When laser diode light of wavelength 660 nm was incident into the element thus prepared, the transmittance of 0-th order diffraction light was 88.5%, and the diffraction efficiencies of +1-st order diffraction light and -1-st order diffraction light were each 4.3%. The change of the diffraction efficiency depending on the wavelength of incident light was such that when laser diode light of wavelength 640 nm was incident, transmittance of 0-th order diffraction light was 88.8% and diffraction efficiencies of +1-st order diffraction light and -1-st order diffraction light were each 4.1%, and when laser diode light of wavelength 680 nm was incident, the transmittance of 0-th order diffraction light was 88.6% and the diffraction efficiencies of +1-st order diffraction light and -1-st order diffraction light were each 4.2%. The element of this example showed a diffraction property that the wavelength-dependence is small in the above wavelength region.

EXAMPLE 2

Fig. 2 shows a cross-sectional view of the diffraction element of this Example.

On a glass substrate 201 as a transparent substrate coated with a low-reflective coating, not shown, a $Ta_2O_5$ film having a refractive index of 2.084 at a wavelength 660 nm and 2.067 at a wavelength 790 nm and having a thickness of 0.28 μm was formed by sputtering. On the $Ta_2O_5$ film, a photoresist was applied by spin coating. Then, a UV-exposure was conducted with a photomask disposed on the $Ta_2O_5$ film side of the glass substrate, followed by conducting a dry etching to prepare a concavo-convex portion 202 of grating.

A mixture was prepared by mixing 60% of pigment-containing liquid (CF red EX-2739 manufactured by Mikuni Color Ltd., which contains 15% of pigment red 254), 3% of pentaerythritol tetraacrylate (KAYARAD-DPHA manufactured by Nippon Kayaku Co., Ltd.) and 37% of propylene glycol-1-monomethyl ether-2-acetate. Further, as a photo polymerization initiator, a composition was prepared by mixing Irgacure 907 (manufactured by Ciba Speciality Chemicals) in the above mixture so that its concentration became 0.2%. Here, the unit of these values is mass %.

The $Ta_2O_5$ film having a concavo-convex shape formed on the surface, was uniformly coated with the composition by spin coating, and maintained at 110°C for 3 minutes. Then, entire surface of the composition was irradiated with ultraviolet rays and maintained at 200°C for 60 minutes to form a filling film 203 of about 1 μm thick. The resin film containing a red organic pigment used for the filling, showed a refractive index of 1.834 at wavelength 660 nm and 1.764 at wavelength 790 nm after curing.

On a surface of a glass substrate 204 provided with a low-reflective coating on the back side, an stretched polycarbonate film having a retardation value of about 175 nm was bonded with a UV-curable type adhesive agent 206 as a phase plate 205. These two glass substrates thus processed were laminated with the UV-curable type adhesive agent 206 so that the polycarbonate film surface and the film containing a red organic pigment opposed to each other, whereby a diffraction element 2 integrated with the phase plate 205 was prepared.

When laser diode light of wavelength 660 nm was incident into the element thus prepared, the transmittance of 0-th order diffraction light was 88.5% and the diffraction efficiencies of +1-st order diffraction light and -1-st order diffraction light were each 4.2%. Further, when laser diode light of wavelength 790 nm was incident, the transmittance of 0-th order diffraction light was 88.3% and the diffraction efficiencies of +1-st order diffraction light and -1-st order diffraction light were each 4.4%, and thus the element showed substantially equal diffraction properties at these two different wavelengths.

When laser diode light of wavelength 680 nm was incident, the transmittance of 0-th order diffraction light was 88.6% and the diffraction efficiencies of +1-st order diffraction light and -1-st order diffraction light were each 4.2%. The element showed diffraction properties having little wavelength-dependence within the above wavelength region. Further, by making the polarization direction of incident light to be 45° to the stretched direction of polycarbonate, linearly polarized incident lights of wavelengths of 660 nm and 790 nm were output as elliptically polarized lights close to circularly polarized lights having ellipticity angles of 84° and 80° respectively, whereby the element substantially functioned as a quater wave plate.

The optical head device employing the diffraction element of the present invention will be described with reference to an example of the construction of Fig. 3. The laser diode is configured to be a double-wavelength laser diode 301 (a laser diode for emitting laser light of wavelength 660 nm for DVD type optical disk, and a laser diode for emitting laser light of wavelength 790 nm for CD type optical disk, are integrated).

Emission light of wavelength 660 nm shown by the solid line and emission light of 790 nm shown by the broken line from the double-wavelength laser diode 301, are transmitted through a beam splitter 302, transformed into parallel lights by a collimator lens 303, transmitted through an objective lens 304 and converged on an information recording plane of an optical disk 305 through substantially the same optical path. These converged lights are reflected by the information recording plane and the reflected lights travel reversely through the same optical path as the outgoing path.

Namely, the reflected lights are transformed into parallel lights again by the objective lens 304, converged by the collimator lends 303 and incident into the beam splitter 302. The lights reflected by the beam splitter 302 travel along an optical axis at an angle of 90° to the outgoing optical axis and converged on a photo-acceptance plane disposed for 660 nm and 790 nm in a double-wavelength photodetector 306. Then, the signal lights are transformed into electrical

signals by the double-wavelength photodetector.

A double-wavelength three-beam generation diffraction grating 307 is, for example, disposed between the double-wavelength laser diode 301 and the beam splitter 302 so that the stretched direction of the integrated phase plate and the polarization direction of output light form 45°. Sub-beams as ±1-st order diffraction lights generated by the double-wavelength three-beam generation diffraction grating 307 are converged on the respective photo-acceptance planes of the double-wavelength photodetector 306 in the same manner as the main beam, and transformed into electrical signals to be used for tracking servo. Here, the three-beam generation diffraction element is divided into two types of grating regions 1001 and 1002 having the concave portions shown by black and convex portions shown by white in Fig. 10 and having the same grating period and reversed phases to each other, in the effective region where light is transmitted. By this division, a diffraction spot to be generated is separated into four spots, which enables to deal with two different track pitches for DVD using a wavelength of 660 nm and for CD using a wavelength of 790 nm for recording and reproducing.

The double-wavelength three-beam generation diffraction element 307 enables to converge signal lights of any of the wavelengths to have substantially the same intensity on the double-wavelength photodetector, and to conduct a tracking servo in any of the optical disks of DVD and CD. Further, since light of any one of these wavelengths is transformed into a substantially circularly polarized light, there is no unstability of laser diode due to returning light from the optical disk, and a good signal property can be obtained.

## INDUSTRIAL APPLICABILITY

By employing the diffraction element of the present invention, it is possible to realize a diffraction element showing little change of diffraction efficiency in response to change of the wavelength due to production-induced variation of laser diodes or a change of environmental temperature. Further, it is possible to achieve a diffraction element whose diffraction properties can be designed flexibly to some certain extent at least for two different wavelengths.

Further, in the optical head device employing the diffraction element of the present invention, by laminating a phase plate, not only reduction of the number of parts of the device or downsizing can be realized, but stable signal detection at times of recording and reproducing a CD type or a DVD type optical disk can also be realized.

By employing the diffraction element of the present invention for an optical head device, stable detection of signal at times of recording and reproducing an optical disk can be realized.

## Claims

1. A diffraction element comprising a transparent substrate having a grating of a periodical concavo-convex shape formed on its surface, and a filling material filling at least concave portions of the grating, wherein both a concavo-convex material forming the concavo-convex portion in the grating and the filling material are materials that contain an organic pigment having the absorption edge of light in a wavelength region shorter than the wavelength used, wherein the wavelength used is a 660 nm wavelength band of a laser diode for a DVD and a 790 nm wavelength band of a laser diode for a CD, and the refractive index of one material having a larger wavelength dispersion between the concavo-convex material and the filling material is lower than the refractive index of the other material having a smaller wavelength dispersion between the concavo-convex material and the filling material, in the entire region of the wavelength used, which is said 660 nm wavelength band of a laser diode for a DVD and said 790 nm wavelength band of a laser diode for a CD, wherein the material having the lower refractive index contains a red organic pigment that has an absorption peak in the vicinity of 550 nm and wherein the material having the higher refractive index has an absorption edge at a shorter wavelength than the absorption edge of the material having the lower refractive index.

2. The diffraction element according to Claim 1, wherein the concavo-convex material has a resist containing an organic pigment.

3. The diffraction element according to Claim 1 or 2, wherein the organic pigment is a red organic pigment which is at least one member selected from the group consisting of diketopyrrolopyrrole type, anthraquinone type, quinacridone type, condensed azo type and perylene type red organic pigments, or a combination thereof.

4. The diffraction element according to Claim 3, wherein the red organic pigment is an anthraquinone type red organic pigment.

5. An optical head device comprising a laser diode as a light source, an objective lens for converging light emitted

from the laser diode on an optical recording medium, and a photodetector for detecting the emitted light converged on and reflected by the optical recording medium, whereby an information is recorded in or reproduced from the optical recording medium, wherein the diffraction element as defined in any one of Claims 1 to 4 is disposed in an optical path between the laser diode and the objective lens.

**6.** The optical head device according to Claim 5, wherein the grating of a periodical concavo-convex shape of the diffraction element is configured in such a manner that a region where light beams are transmitted is divided, so that the diffracted light beams are divided.

**Patentansprüche**

**1.** Beugungselement umfassend ein transparentes Substrat, welches ein Gitter bzw. Beugungsgitter mit einer periodischen konkavkonvexen Form aufweist, das an seiner Oberfläche gebildet ist, und ein Füllmaterial, welches zumindest konkave Abschnitte des Gitters füllt, wobei sowohl ein konkavkonvexes Material, welches die konkavkonvexen Abschnitte im Gitter bildet, als auch das Füllmaterial Materialien sind, die ein organisches Pigment enthalten, welches die Absoptionskante von Licht in einem Wellenlängenbereich kürzer bzw. unterhalb der verwendeten Wellenlänge aufweist, wobei die verwendete Wellenlänge ein 660 nm Wellenlängenband von einer Laserdiode für eine DVD und ein 790 nm Wellenlängenband von einer Laserdiode für eine CD ist, und der Brechungsindex von einem Material, welches eine größere Wellenlängendispersion zwischen dem konkavkonvexen Material und dem Füllmaterial aufweist, geringer ist als der Brechungsindex des anderen Materials, welches eine kleinere Wellenlängendispersion zwischen dem konkavkonvexen Material und dem Füllmaterial aufweist, in dem gesamten Bereich der verwendeten Wellenlänge, welcher das 660 nm Wellenlängenband von einer Laserdiode für eine DVD und das 790 nm Wellenlängenband von einer Laserdiode für eine CD darstellt bzw. umfasst, wobei das Material, welches den geringeren Brechungsindex hat, ein rotes organisches Pigment enthält, das einen Absorptionspeak in der Nähe von 550 nm aufweist und wobei das Material, welches den höheren Brechungsindex hat, eine Absorptionskante bei einer kürzeren Wellenlänge aufweist als die Absorptionskante des Materials, welches den niedrigeren Brechungsindex hat.

**2.** Beugungselement nach Anspruch 1, wobei das konkavkonvexe Material einen Abdeck- bzw. Photolack aufweist, welcher ein organisches Pigment enthält.

**3.** Beugungselement nach Anspruch 1 oder 2, wobei das organische Pigment ein rotes organisches Pigment ist, welches zumindest ein Mitglied bzw. Element ausgewählt aus der Gruppe bestehend aus den roten organischen Pigmenten vom Typ Diketopyrrolopyrrol, vom Typ Anthrachinon, vom Typ Chinacridon, vom Typ kondensiertes Azo und vom Typ Perylen ist, oder eine Kombination davon.

**4.** Beugungselement nach Anspruch 3, wobei das rote organische Pigment ein rotes organisches Pigment vom Typ Anthrachinon ist.

**5.** Optische Kopfvorrichtung umfassend eine Laserdiode als eine Lichtquelle, eine Objektivlinse, um Licht zu bündeln, welches von der Laserdiode zu einem optischen Aufzeichnungsmedium emittiert wird, und einen Photodetektor, um das emittierte Licht, welches an dem optischen Aufzeichnungsmedium gebündelt und von diesem reflektiert wird, zu detektieren, wodurch eine Information in dem optischen Aufzeichnungsmedium aufgezeichnet oder von diesem reproduziert ist bzw. wird, wobei das Beugungselement, wie in irgendeinem der Ansprüche 1 bis 4 definiert, in einem optischen Pfad zwischen der Laserdiode und der Objektivlinse angeordnet ist.

**6.** Optische Kopfvorrichtung nach Anspruch 5, wobei das Gitter mit einer periodischen konkavkonvexen Form des Beugungselements derart konfiguriert ist, dass ein Bereich, in dem Lichtstrahlen durchfallen bzw. übertragen werden, geteilt bzw. aufgespalten ist, so dass die gebeugten Lichtstrahlen geteilt bzw. aufgespalten sind.

**Revendications**

**1.** Elément de diffraction comprenant un substrat transparent ayant un réseau périodique de forme concave-convexe formé sur sa surface, et un matériau de remplissage remplissant au moins des portions concaves du réseau, dans lequel un matériau concave-convexe formant la portion concave-convexe dans le réseau et le matériau de remplissage sont tous deux des matériaux qui contiennent un pigment organique ayant la discontinuité d'absorption de lumière dans une région de longueur d'ondes plus courte que la longueur d'ondes utilisée, dans lequel la longueur

d'ondes utilisée est une bande de longueur d'ondes de 660 nm d'une diode laser pour un DVD et une bande de longueur d'ondes de 790 nm d'une diode laser pour un CD, et l'indice de réfraction d'un matériau ayant une dispersion de longueur d'ondes plus grande entre le matériau concave-convexe et le matériau de remplissage est inférieur à l'indice de réfraction de l'autre matériau ayant une plus petite dispersion de longueur d'ondes entre le matériau concave-convexe et le matériau de remplissage, dans la région entière de la longueur d'ondes utilisée, qui est ladite bande de longueur d'ondes de 660 nm d'une diode laser pour un DVD et ladite bande de longueur d'ondes de 790 nm d'une diode laser pour un CD, dans lequel le matériau ayant l'indice de réfraction plus faible contient un pigment organique rouge qui a un pic d'absorption au voisinage de 550 nm, et dans lequel le matériau ayant l'indice de réfraction plus élevé a une discontinuité d'absorption à une longueur d'ondes plus courte que la discontinuité d'absorption du matériau ayant l'indice de réfraction plus faible.

**2.** Elément de diffraction selon la revendication 1, dans lequel le matériau concave-convexe a une matière de protection contenant un pigment organique.

**3.** Elément de diffraction selon la revendication 1 ou la revendication 2, dans lequel le pigment organique est un pigment organique rouge qui est au moins un élément sélectionné dans le groupe constitué de pigments organiques rouges du type dikétopyrrolopyrrole, du type anthraquinone, du type quinacridone, du type azo condensé et du type pérylène, ou d'une combinaison de ceux-ci.

**4.** Elément de diffraction selon la revendication 3, dans lequel le pigment organique rouge est un pigment organique rouge du type anthraquinone.

**5.** Dispositif de tête optique comprenant une diode laser en tant que source de lumière, une lentille d'objectif pour faire converger la lumière émise à partir de la diode laser sur un support d'enregistrement optique, et un photodétecteur pour détecter la lumière émise amenée à converger sur, et réfléchie par le support d'enregistrement optique, une information étant enregistrée dans, ou reproduite à partir du support d'enregistrement optique, l'élément de diffraction tel que défini dans l'une quelconque des revendications 1 à 4 étant disposé sur un chemin optique entre la diode laser et la lentille d'objectif.

**6.** Dispositif de tête optique selon la revendication 5, dans lequel le réseau de forme concave-convexe périodique de l'élément de diffraction est configuré de sorte qu'une région dans laquelle des faisceaux lumineux sont transmis est divisée, de sorte que les faisceaux lumineux diffractés sont divisés.

Fig.1

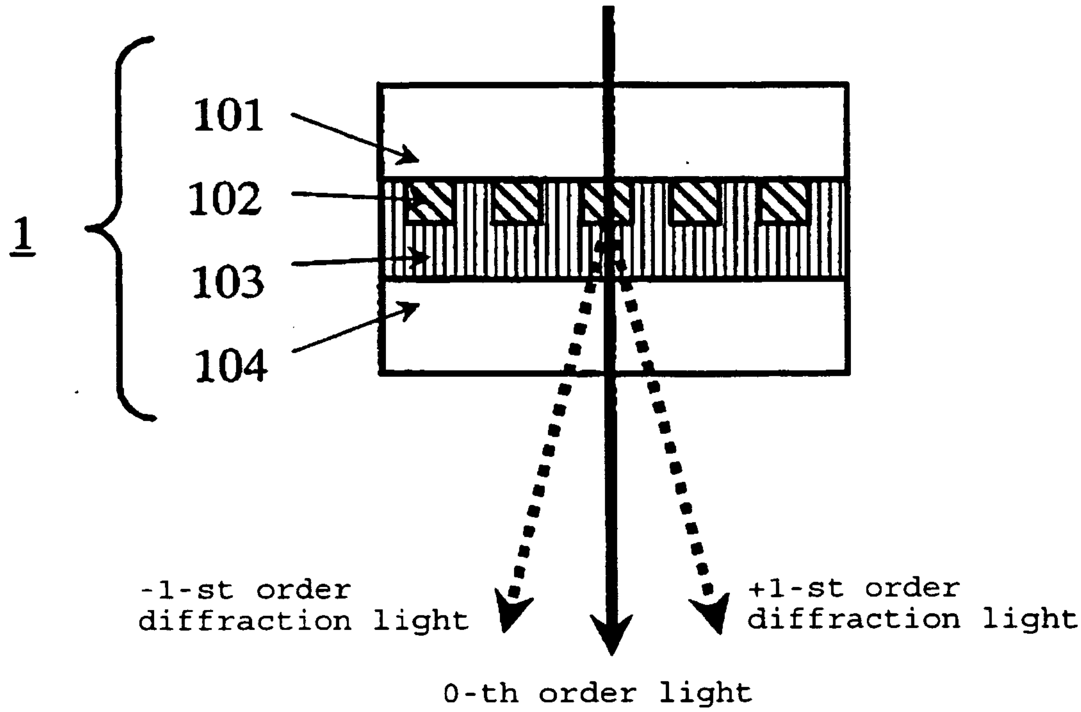
1
101
102
103
104
-1-st order diffraction light
+1-st order diffraction light
0-th order light

Fig.2

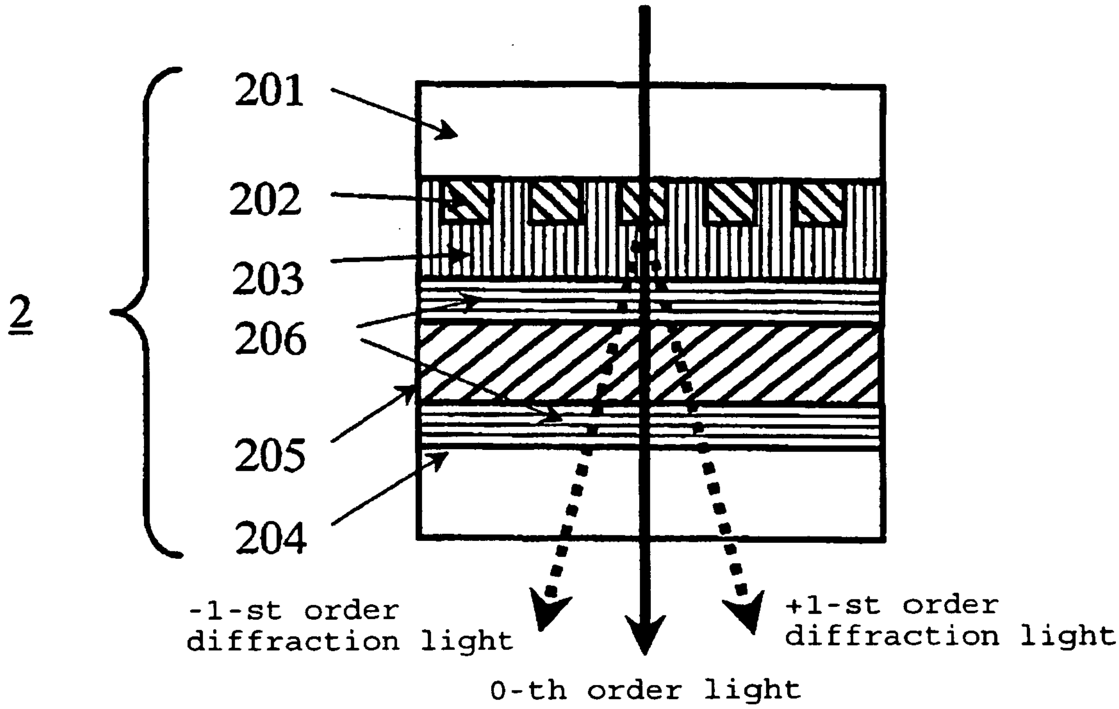
201
202
203
206
205
204
2
-1-st order diffraction light
+1-st order diffraction light
0-th order light

Fig.3

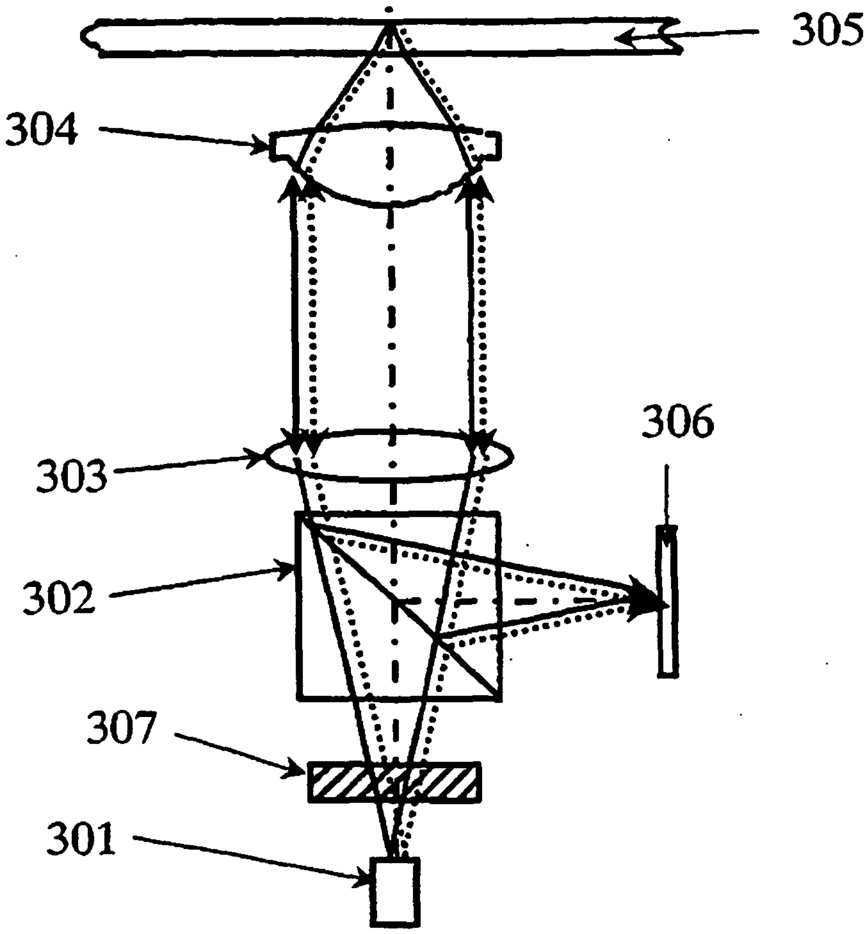

Fig.4

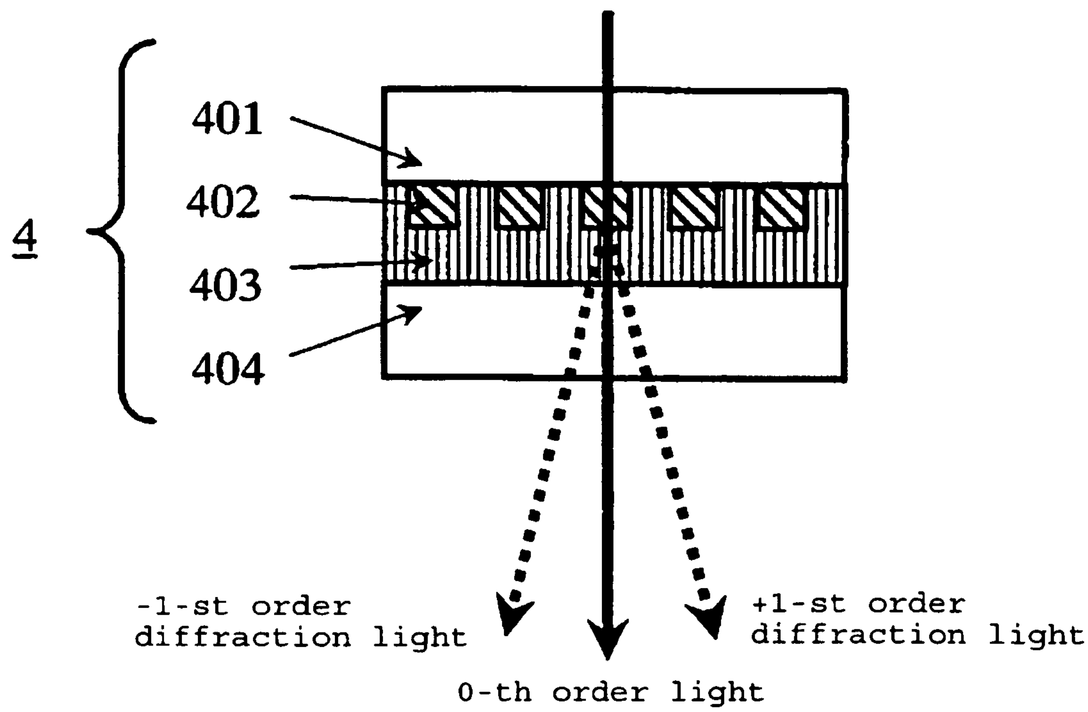
4
401
402
403
404
-1-st order
diffraction light
+1-st order
diffraction light
0-th order light

Fig.5

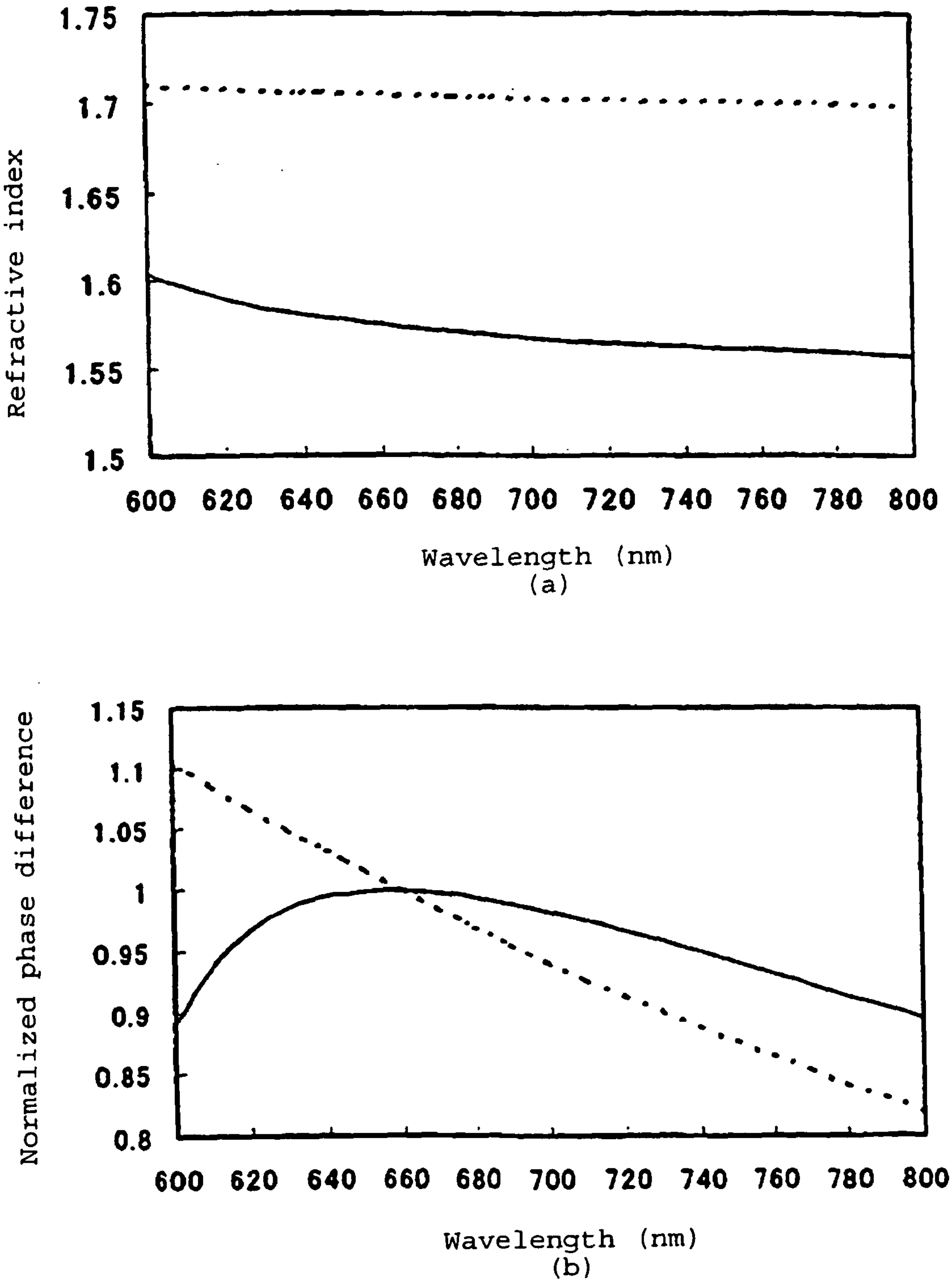
1.75
1.7
1.65
1.6
1.55
1.5
Refractive index
600 620 640 660 680 700 720 740 760 780 800
Wavelength (nm)
(a)
1.15
1.1
1.05
1
0.95
0.9
0.85
0.8
Normalized phase difference
600 620 640 660 680 700 720 740 760 780 800
Wavelength (nm)
(b)

# Fig.6

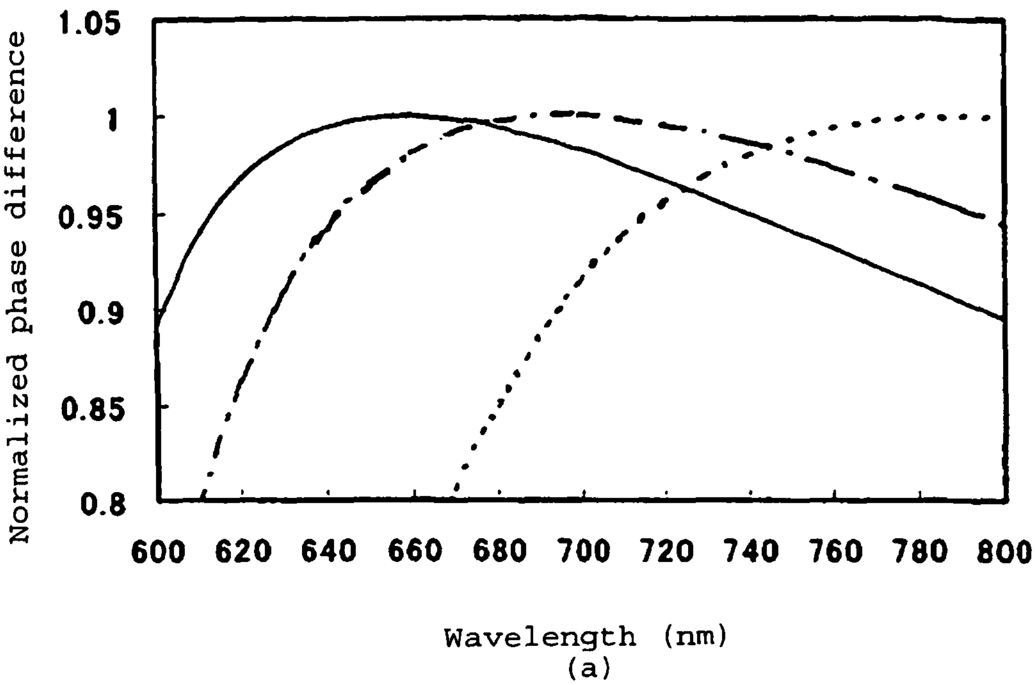
Normalized phase difference
1.05
1
0.95
0.9
0.85
0.8
600 620 640 660 680 700 720 740 760 780 800
Wavelength (nm)

(a)

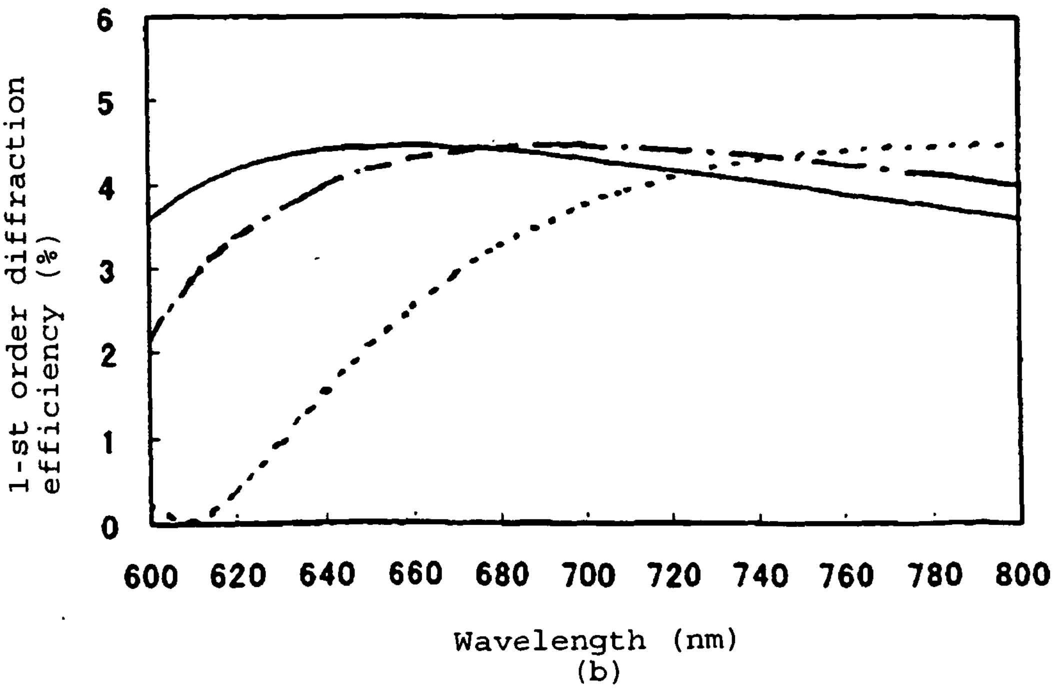
1-st order diffraction efficiency (%)
6
5
4
3
2
1
0
600 620 640 660 680 700 720 740 760 780 800
Wavelength (nm)

(b)

Fig.7

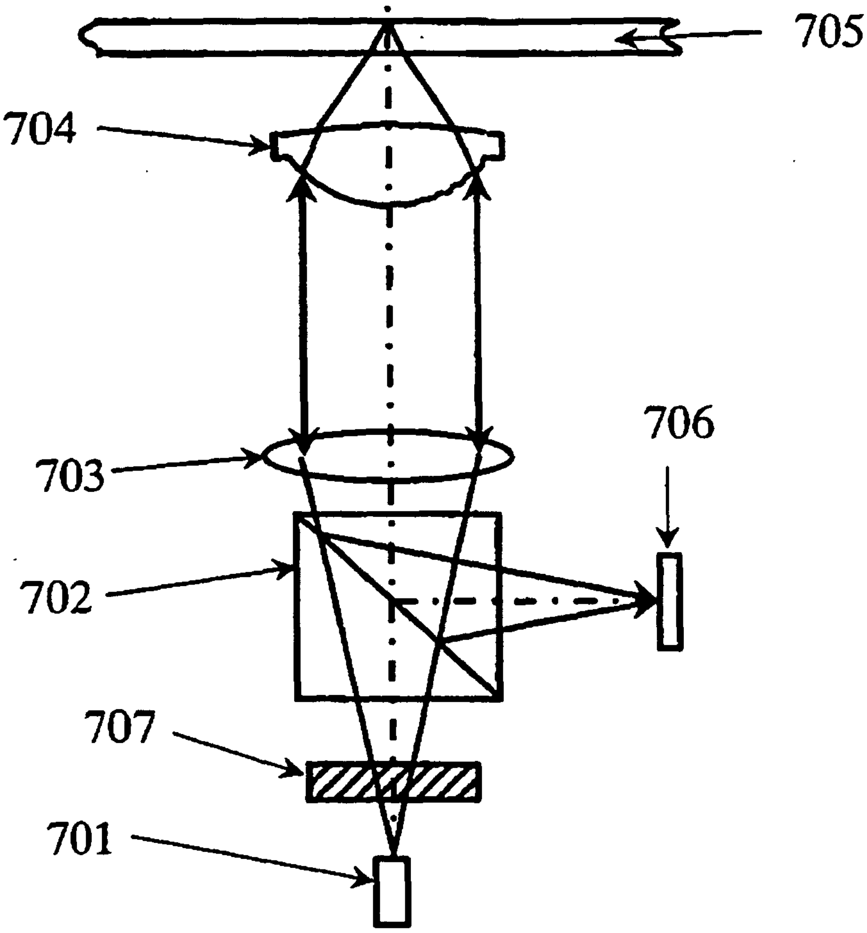

# Fig.8

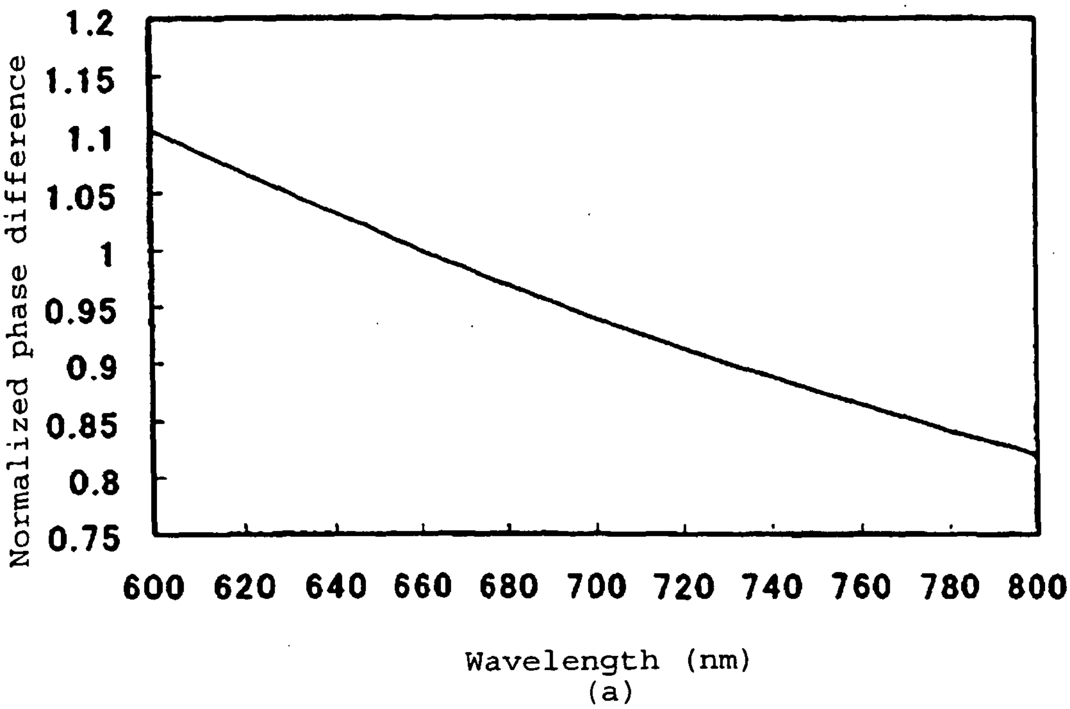
1.2
1.15
1.1
1.05
1
0.95
0.9
0.85
0.8
0.75
Normalized phase difference
600 620 640 660 680 700 720 740 760 780 800
Wavelength (nm)

(a)

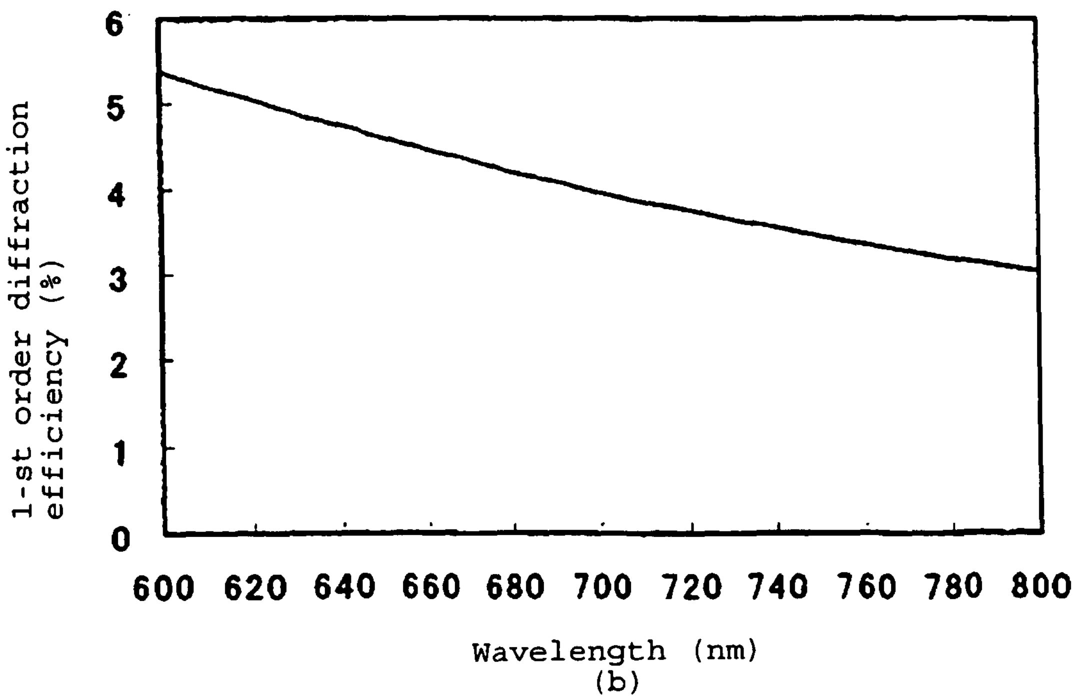
6
5
4
3
2
1
0
1-st order diffraction efficiency (%)
600 620 640 660 680 700 720 740 760 780 800
Wavelength (nm)

(b)

# Fig.9

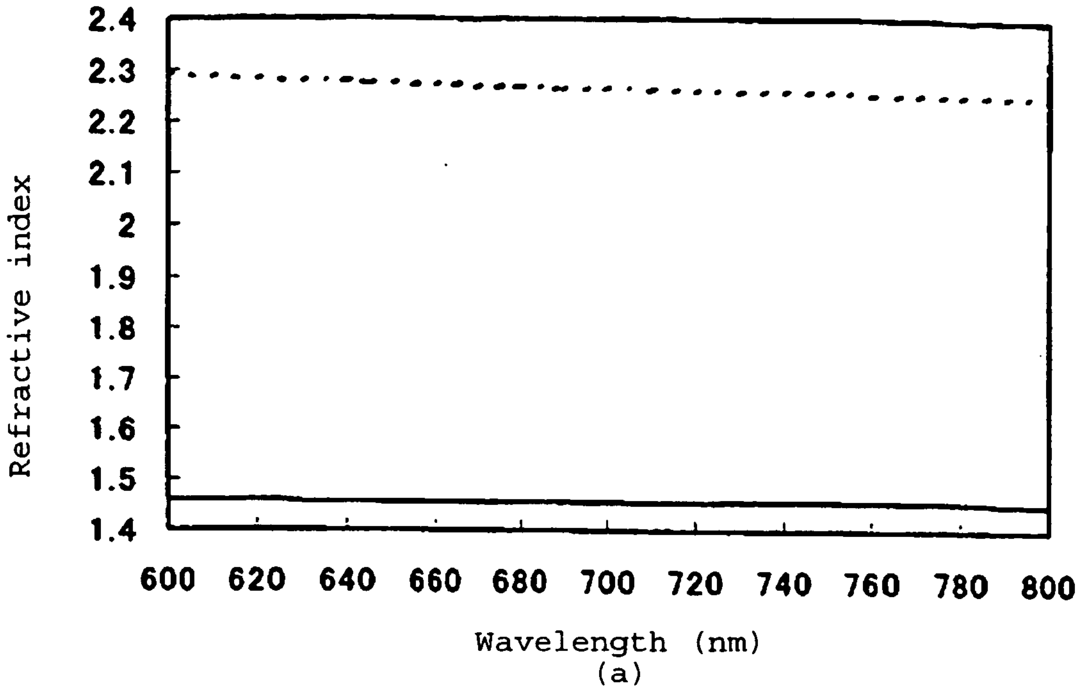
2.4
2.3
2.2
2.1
2
1.9
1.8
1.7
1.6
1.5
1.4
Refractive index
600 620 640 660 680 700 720 740 760 780 800
Wavelength (nm)

(a)

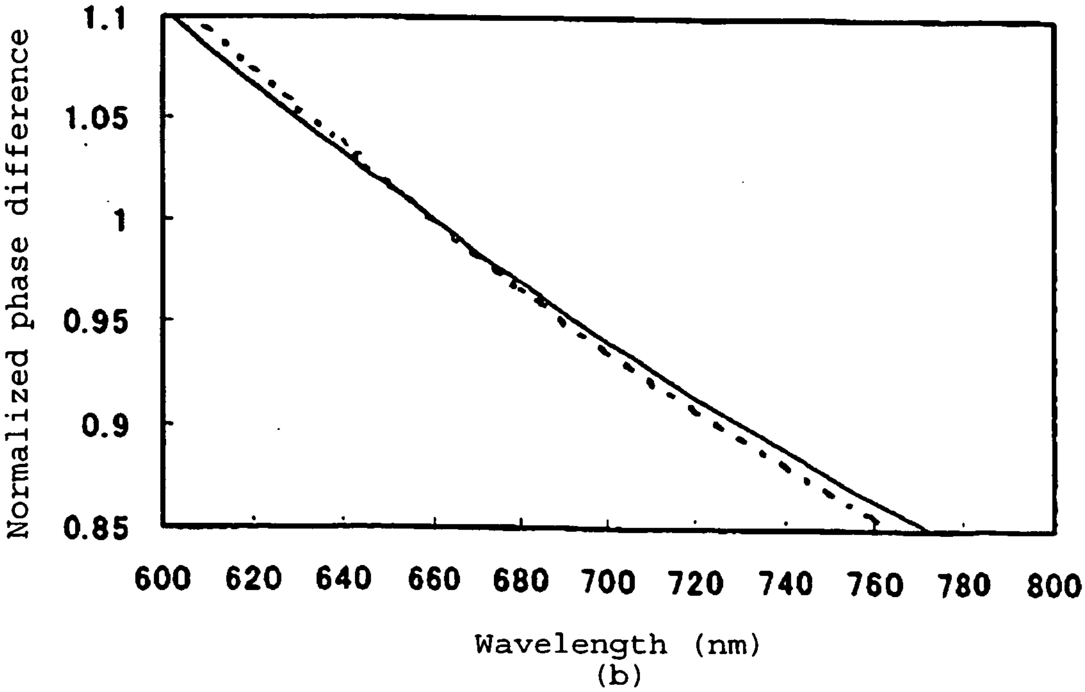
1.1
1.05
1
0.95
0.9
0.85
Normalized phase difference
600 620 640 660 680 700 720 740 760 780 800
Wavelength (nm)

(b)

Fig.10

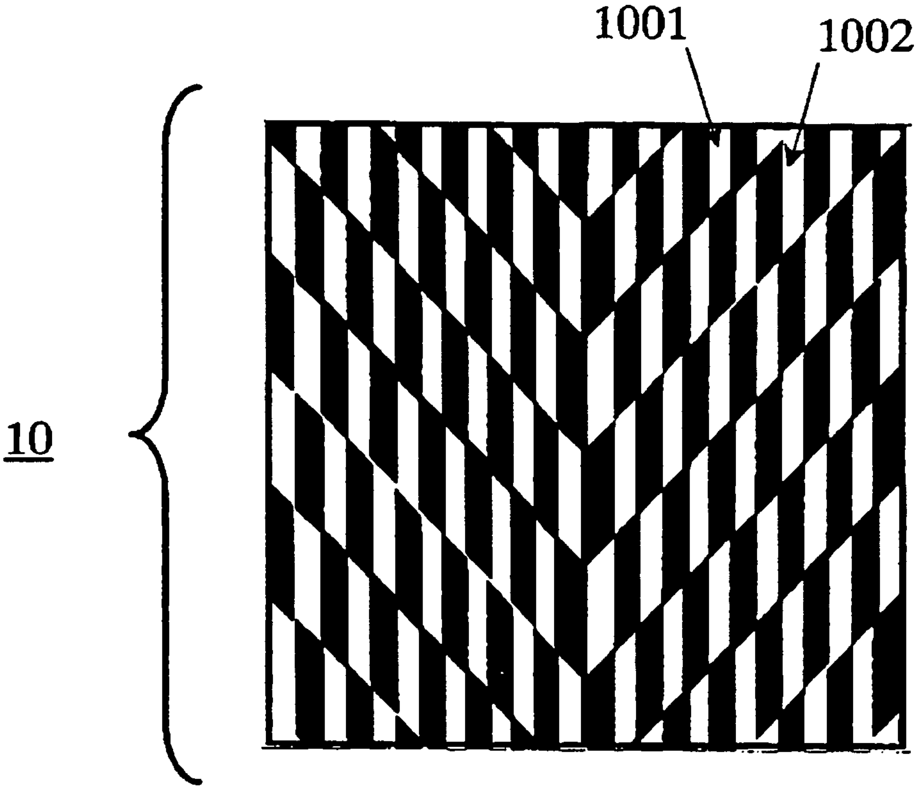

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1361461 A1
- JP 2000309584 A